# EUROPEAN PATENT APPLICATION

(11) **EP 4 629 082 A2**
(43) Date of publication of application: **08.10.2025**
(21) Application number: 25179107.5
(22) Date of filing: 27.05.2025
(51) Int. Cl.: G06F 9/50

(54) **METHOD AND APPARATUS FOR EXECUTING INSTRUCTION BY NEURAL NETWORK PROCESSOR, STORAGE MEDIUM, AND DEVICE**

(30) Priority: 28.05.2024 CN 202410676152
(71) Applicant: Beijing Horizon Information Technology Co., Ltd., Beijing 100094 (CN)
(72) Inventor: LI, Jianjun, Beijing, 100094 (CN)
(74) Representative: Patentanwälte Magenbauer & Kollegen Partnerschaft mbB

(57) **Abstract**

Disclosed are a data access method and apparatus, a storage medium, and an electronic device. The method includes: determining a first instruction to be executed by the neural network processor; determining, based on requested storage space information corresponding to the first instruction, storage space address information meeting the requested storage space information, the storage space address information comprising first storage space address information of a first storage space and second storage space address information of a second storage space; and executing, based on the storage space address information, the first instruction through the neural network processor.

## Description

### FIELD OF THE INVENTION

The disclosure relates to computer technology, and in particular, to a method and apparatus for executing an instruction by a neural network processor, a storage medium, and a device.

### BACKGROUND OF THE INVENTION

In a scenario where an instruction (or instruction sequence) of a neural network model (referred to "model" for short) is executed through a neural network processor, in general, data transfer and sharing among a plurality of processors (also referred to as processor cores) is supported through a static random-access memory (SRAM, which may be referred to as a global SRAM) such as an L2 SRAM, an L3 SRAM, etc. When a storage space of the SRAM is requested for a model instruction to be executed, the storage space request tends to fail if part of the storage space of the SRAM has been occupied by a model task in execution, and the free storage space fails to meet storage space requirements of the model instruction to be executed, thereby leading to a low rate of utilization of the SRAM, and a long waiting time of the model task to be executed.

### SUMMARY OF THE INVENTION

To solve the above technical problem, according to the embodiments of the present disclosure, there is provided the present disclosure a method and apparatus for executing an instruction by a neural network processor, a storage medium, and a device, capable of improving a rate of utilization of a storage space, and reducing a waiting time of a model task to be executed.

In a first aspect of the present disclosure, there is provided a method for executing an instruction by a neural network processor, including: determining a first instruction to be executed by the neural network processor; determining, based on requested storage space information corresponding to the first instruction, storage space address information meeting the requested storage space information, the storage space address information including first storage space address information of a first storage space and second storage space address information of a second storage space; and executing, based on the storage space address information, the first instruction through the neural network processor.

In a second aspect of the present disclosure, there is provided an apparatus for executing an instruction by a neural network processor, including: a first processing module, configured to determine a first instruction to be executed by the neural network processor; a second processing module, configured to determine, based on requested storage space information corresponding to the first instruction, storage space address information meeting the requested storage space information, the storage space address information including first storage space address information of a first storage space and second storage space address information of a second storage space; and a control module, configured to execute the first instruction through the neural network processor based on the storage space address information.

In a third aspect of the present disclosure, there is provided a computer readable storage medium storing a computer program thereon, which, when executed by a processor, causes the processor to implement the method for executing an instruction by a neural network processor according to any one of embodiments of the present disclosure.

In a fourth aspect of the present disclosure, there is provided an electronic device, including: a processor; and a memory configured to store processor-executable instructions. The processor is configured to read the executable instructions from the memory, and execute the instructions to implement the method for executing an instruction by a neural network processor according to any one of embodiments of the present disclosure.

In a fifth aspect of the present disclosure, there is provided a computer program product including instructions, which, when executed by a processor, cause the processor to perform the method for executing an instruction by a neural network processor according to any one of embodiments of the present disclosure is implemented.

Based on a method and apparatus for executing an instruction by a neural network processor, a storage medium, and a device according to embodiments of the present disclosure, in allocating a storage space for an instruction to be executed, that is, the first instruction, storage space allocation may be performed for the instruction to be executed combining the first storage space and the second storage space, such that in case a free space in the first storage space cannot meet storage requirements of the instruction to be executed, part of the free space of the second storage space may be allocated for the instruction to be executed, in addition to allocating the free space of the first storage space, to meet storage space requirements of the instruction to be executed, thereby improving the rate of utilization of the first storage space, reducing the waiting time of the instruction to be executed, and improving the instruction execution efficiency by avoiding or reducing occurrences of a failing case of the storage space request of the instruction to be executed due to that the first storage space fails to meet the requirements.

### BRIEF DESCRIPTION OF THE DRAWINGS

FIG. 1 is an illustrative scenario of application of a method for executing an instruction by a neural network processor according to the present disclosure.
FIG. 2 is a flowchart of a method for executing an instruction by a neural network processor according to an illustrative embodiment of the present disclosure.
FIG. 3 is a flowchart of a method for executing an instruction by a neural network processor according to another illustrative embodiment of the present disclosure.
FIG. 4 is a flowchart of a method for executing an instruction by a neural network processor according to yet another illustrative embodiment of the present disclosure.
FIG. 5 is a schematic diagram of a compilation mechanism according to an illustrative embodiment of the present disclosure.
FIG. 6 is a flowchart of a method for executing an instruction by a neural network processor according to still another illustrative embodiment of the present disclosure.
FIG. 7 is a flowchart of a method for executing an instruction by a neural network processor according to yet another illustrative embodiment of the present disclosure.
FIG. 8 is a schematic diagram of an addressing principle according to an illustrative embodiment of the present disclosure.
FIG. 9 is a flowchart of a method for executing an instruction by a neural network processor according to still another illustrative embodiment of the present disclosure.
FIG. 10 is a schematic diagram of a structure of an apparatus for executing an instruction by a neural network processor according to an illustrative embodiment of the present disclosure.
FIG. 11 is a schematic diagram of a structure of an apparatus for executing an instruction by a neural network processor according to another illustrative embodiment of the present disclosure.
FIG. 12 is a schematic diagram of a structure of an apparatus for executing an instruction by a neural network processor according to yet another illustrative embodiment of the present disclosure.
FIG. 13 a schematic diagram of a structure of an apparatus for executing an instruction by a neural network processor according to still another illustrative embodiment of the present disclosure.
FIG. 14 is a diagram of a structure of an electronic device according to embodiments of the present disclosure.

### DETAILED DESCRIPTION OF THE EMBODIMENTS

To explain the present disclosure, illustrative embodiments of the present disclosure are elaborated below with reference to accompanying drawings. Obviously, the embodiments described are merely a part of the embodiments of the present disclosure, but not all embodiments. It should be understood that the present disclosure is not limited to the illustrative embodiments.

It should be noted that the relative arrangements of components and steps, numerical expressions, and numerical values set forth in these embodiments do not limit the scope of the present disclosure, unless specifically stated otherwise.

### Disclosure overview

In implementing the present disclosure, it is discovered by the inventor that in a scenario where data transfer and sharing among a plurality of processors (also referred to as processor cores) is supported through an L2 SRAM, an L3 SRAM, etc., when a storage space of the SRAM is requested for a model instruction (also referred to as a model task) to be executed, the storage space request tends to fail if part of the storage space of the SRAM has been occupied by a model task in execution, and the free storage space fails to meet storage space requirements of the model instruction to be executed. The model instruction to be executed has to wait for other model tasks to release the storage space until the free storage space meets its requirements, such that a storage space is allocated for the model instruction to be executed, leading to a low rate of utilization of the SRAM on one hand, and prolonged task waiting time on the other hand, significantly reducing task scheduling efficiency.

### Illustrative overview

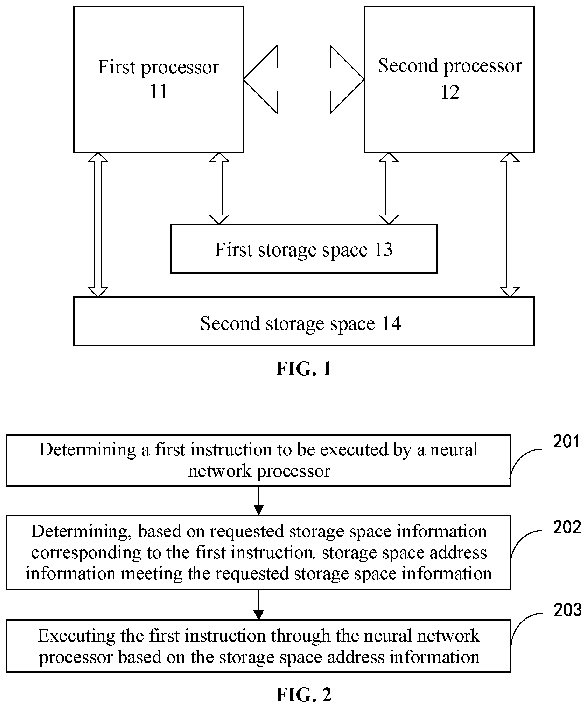

FIG. 1 is an illustrative scenario of application of a method for executing an instruction by a neural network processor according to the present disclosure. As shown in FIG. 1, the first processor 11 may be a processor capable of running a neural network model such as a central processing unit (CPU), a microprocessor, etc., and the second processor 12 is a neural network processor. The first storage space 13 may be a global SRAM configured for inter-processor data transfer and sharing. For example, the first storage space 13 may be an inter-core shared memory such as an L2 SRAM, an L3 SRAM, etc. The second storage space 14 may be a double data rate synchronous dynamic random-access memory (DDR) or another memory. Using the method for executing an instruction by a neural network processor according to the present disclosure, in case that data such as image data, voice data, etc., are to be processed through a neural network model, the first processor 11 may determine a first instruction to be executed by the neural network processor 12; determine, based on requested storage space information corresponding to the first instruction, storage space address information meeting the requested storage space information. The storage space address information includes first storage space address information of a first storage space 13 and second storage space address information of a second storage space 14; and then may provide the storage space required for the neural network processor 12 to execute the first instruction based on the storage space address information, and execute the first instruction through the neural network processor 12, to complete a computing task corresponding to the first instruction. As the storage space address information allocated for the first instruction may include both the first storage space address information of the first storage space 13 and the second storage space address information of the second storage space 14, even if a free storage space of the first storage space 13 cannot meet storage space requirements of the first instruction, storage space allocation for the first instruction can still be implemented combining the second storage space 14, to avoid or reduce failing cases of the storage space request of the first instruction, thereby not only to improving the rate of utilization of the first storage space, but also reducing the waiting time of the first instruction to be executed, and improving instruction execution efficiency.

### Illustrative method

FIG. 2 is a flowchart of a method for executing an instruction by a neural network processor according to an illustrative embodiment of the present disclosure. The embodiment may apply to an electronic device, for example an onboard computing platform. As shown in FIG. 2, the method according to embodiments of the present disclosure may include steps as follows.

Step 201, Determining a first instruction to be executed by the neural network processor.

The first instruction may be an instruction (which may be referred to as a model instruction) obtained by compiling a neural network model, the inference of which has to be accelerated, and may be configured to perform computation on input data through the neural network processor. The first instruction may include one instruction or multiple instructions, for example it may include an instruction related to data loading, an instruction related to data computation, an instruction related to data storage, etc., which may be determined specifically based on a specific compilation result of the neural network model.

Step 202, Determining, based on requested storage space information corresponding to the first instruction, storage space address information meeting the requested storage space information.

The storage space address information includes first storage space address information of a first storage space and second storage space address information of a second storage space.

In some optional embodiments, the requested storage space information corresponding to the first instruction may include a size of a storage space required for executing the first instruction. The storage space for example may be of a size 4MB, 6MB, 8MB, etc. The requested storage space information corresponding to the first instruction may be determined and stored based on the model instruction in advance. Optionally, the requested storage space information corresponding to the first instruction may be stored together with the first instruction. For example, the requested storage space information may be carried in the first instruction, or stored with the first instruction in a designated storage space in a designated data format. Then, after the first instruction has been determined, the requested storage space information corresponding to the first instruction may be obtained based on the first instruction, or from the designated storage space. Optionally, there may also be a pre-configured mapping relation between the requested storage space information and the first instruction. After the first instruction has been determined, the requested storage space information corresponding to the first instruction may be obtained based on the first instruction and the mapping relation between requested storage space information and the first instruction.

In some optional embodiments, the first storage space and the second storage space may be storage spaces corresponding to different types of memories in a system on chip. The first storage space has a memory access speed higher than a memory access speed of the second storage space. For example, the first storage space may be an inter-processor shared cache memory, that is, the above global SRAM, such as the L2 SRAM, the L3 SRAM, etc. That is, a memory serving as the global SRAM may differ depending on a storage level in the system on chip in an actual application. The second storage space may be a DDR or another memory in the system on chip.

In some optional embodiments, the first storage space address information of the first storage space and the second storage space address information of the second storage space included in the storage space address information may be determined based on the requested storage space information corresponding to the first instruction, the free storage space information of the first storage space, and the free storage space information of the second storage space.

In some optional embodiments, the requested storage space information corresponding to the first instruction may include sizes of the first and second storage spaces to be requested. For example, the size of the first storage space to be requested is 4MB, and the size of the second storage space to be requested is 4MB. Then, the first storage space address information of the first storage space may be determined from the free storage space of the first storage space based on the size of the first storage space to be requested; and the second storage space address information of the second storage space may be determined from the free storage space of the second storage space based on the size of the second storage space to be requested.

Step 203, Executing, based on the storage space address information, the first instruction through the neural network processor.

After the storage space address information meeting the requested storage space information has been determined, the first instruction (possibly together with other related data required for executing the first instruction) may be stored in a storage space corresponding to the storage space address information, and the storage space address information, or virtual address information corresponding to the storage space address information, may be transmitted to the neural network processor, so that the neural network processor may access the instruction as well as data in the storage space corresponding to the storage space address information. The neural network processor may execute the first instruction using respective storage spaces based on the storage space address information or the virtual address information obtained.

With the method for executing an instruction by a neural network processor according to the embodiment, in allocating a storage space for an instruction to be executed (that is, the first instruction), storage space allocation may be performed for the instruction to be executed combining the first storage space and the second storage space, such that in case a free space of the first storage space cannot meet storage requirements of the instruction to be executed, a part of the free space of the second storage space may be allocated for the instruction to be executed in addition to allocating the free space of the first storage space for the instruction to be executed, to meet storage space requirements of the instruction to be executed, thereby improving the rate of utilization of the first storage space, reducing the waiting time of the instruction to be executed, and improving the instruction execution efficiency by avoiding or reducing occurrences of a failing case of the storage space request of the instruction to be executed due to that the first storage space fails to meet the requirements.

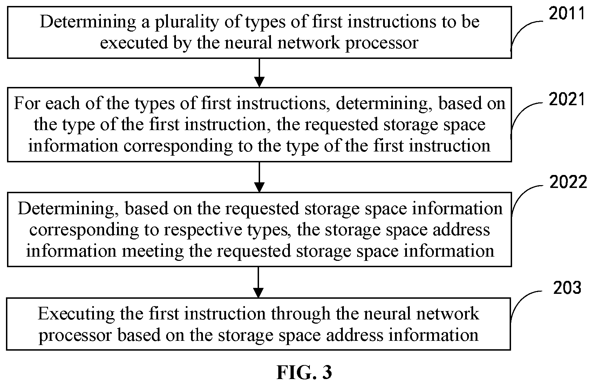

FIG. 3 is a flowchart of a method for executing an instruction by a neural network processor according to another illustrative embodiment of the present disclosure.

In some optional embodiments, as shown in FIG. 3, based on the embodiment shown in FIG. 2, step 201of the determining a first instruction to be executed by the neural network processor may include steps as follows.

Step 2011, Determining a plurality of types of first instructions to be executed by the neural network processor.

The plurality of types of first instructions may refer to a plurality of versions of the model instruction obtained by performing compilation based on different modes of hybrid allocation of the first storage space and the second storage space. That is, different types of first instructions may complete the same computing task. However, different types of first instructions may be allocated with first storage spaces of different sizes, as well as second storage spaces of different sizes, and a first instruction of any type is an optimized instruction obtained by compilation in a respective storage space allocation mode, guaranteeing that each instruction is executed with good performance. Different types of first instructions may differ in execution efficiency. That is, both the first storage space and the second storage space allocated for a first instruction of a first type differ from those allocated for a first instruction of a second type, and the corresponding execution efficiency or executing time also differ. For example, in case the first storage space is the SRAM and the second storage space is the DDR, as the access speed of the SRAM is higher than the access speed of the DDR, a mismatch between a hybrid allocation mode of the storage resource on which model compilation is based and an actual hybrid allocation mode in use tends to impact a model execution speed. In view of this, compilation may be performed beforehand based on different modes of hybrid allocation of the storage spaces, to obtain a plurality of types of instructions, and when model inference acceleration is performed through the neural network processor, a plurality of types of first instructions to be executed by the neural network processor may be determined.

Step 202of the determining, based on requested storage space information corresponding to the first instruction, storage space address information meeting the requested storage space information may include steps as follows.

Step 2021, For each of the types of first instructions, determining, based on the type of the first instruction, the requested storage space information corresponding to the type of the first instruction.

Requested storage space information corresponding to any type may include sizes of the first and second storage spaces to be requested.

In some optional examples, requested storage space information corresponding to any type of first instructions may include a first storage space of iMB and a second storage space of jMB, wherein i and j may be any positive integers. A sum of i and j may be a preset value, which may be set based on a specific case of the model. For example, the requested storage space information corresponding to a type 1 includes a first storage space of 8MB and a second storage space of 0MB, the requested storage space information corresponding to a type 2 includes a first storage space of 6MB and a second storage space of 2MB, the requested storage space information corresponding to a type 3 includes a first storage space of 4MB and a second storage space of 4MB, the requested storage space information corresponding to a type 4 includes a first storage space of 2MB and a second storage space of 6MB, and the requested storage space information corresponding to a type 5 includes a first storage space of 0MB and a second storage space of 8MB. Here, the sum of i and j is 8MB. And the types 1 to 5 are for mere illustrative description, rather than for limiting the method of the present disclosure.

Step 2022, Determining, based on the requested storage space information corresponding to respective types, the storage space address information meeting the requested storage space information.

The requested storage space information corresponding to each type may be matched to the free storage space of the first storage space. An optimal type of the plurality of types may be determined based on whether the free storage space of the first storage space meets the requested storage space information corresponding to respective types. The storage space address information is determined based on requested storage space information corresponding to the optimal type. For example, the first storage space address information is determined from the first storage space based on a size of a first storage space to be requested corresponding to the optimal type, the second storage space address information is determined from the second storage space based on a size of a second storage space to be requested corresponding to the optimal type, and then the storage space address information meeting the requested storage space information is obtained based on the first storage space address information and the second storage space address information.

According to the embodiment, by determining a plurality of types of first instructions, storage space address information that meets the requested storage space information corresponding to a first instruction with a best match may be determined based on the sizes of the first and storage spaces to-be-requested corresponding to each type, and in combination with a specific condition of the free storage space of the first storage space, thereby guaranteeing instruction execution performance.

In some optional embodiments, the sizes of the first and second storage spaces to be requested corresponding to each type differs.

According to the embodiment, as the sizes of first and second storage spaces to be requested for each type of first instructions differ, the model instruction of the model with optimized performance in different modes of hybrid allocation of the first and storage spaces may be obtained, such that in performing storage space allocation for a model instruction, an instruction of a best type with storage requirements that may be met, may be selected based on a specific condition of an actual first and second storage spaces that are available for allocation, thereby improving a matching degree between a first instruction executed and the storage spaces, guaranteeing instruction execution performance, avoiding the lowering of the instruction execution efficiency caused by that a storage space with a high memory access speed cannot meet requirements of instruction execution. For example, if in compilation, the first instruction is compiled based on memory access performance of the storage space of the SRAM, and in execution, part or all of the storage space of the SRAM is to be implemented using the storage space of the DDR, as the DDR has a lower access speed than the SRAM, performance of executing the first instruction will be lowered. According to the embodiment, in view of this case, a plurality of types of first instructions are obtained at the same time through compilation, such that there may be a matching first instruction for any hybrid case of the first storage space and the second storage space, guaranteeing instruction execution performance.

In some optional embodiments, the plurality of types of first instructions may be obtained as follows.

The plurality of types of first instructions may be obtained by compiling a neural network model to be compiled based on a plurality of groups of storage space parameters; each group of storage space parameters include a first size parameter corresponding to the first storage space and a second size parameter corresponding to the second storage space; the first and second size parameters are different for different groups.

The first size parameter corresponding to the first storage space is the size of the first storage space to be requested when executing the first instruction, and the second size parameter corresponding to the second storage space is the size of the second storage space to be requested when executing the first instruction. Through different storage space parameters, different storage space allocation modes are provided for compiling the neural network model to be compiled, and a first instruction with optimal performance may be obtained in respective storage space allocation modes.

According to the embodiment, a plurality of types of first instructions are obtained by compilation with different storage space parameters, such that in a run stage, a most suitable type may be selected for execution based on actual availability of the first storage space at a higher speed, guaranteeing instruction execution performance.

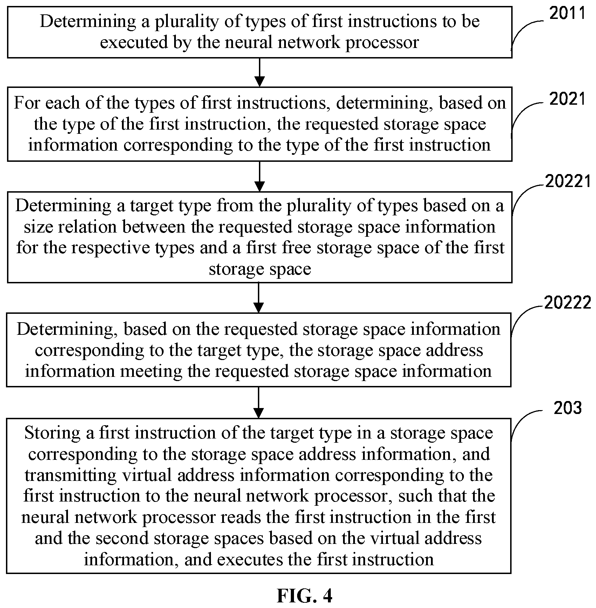

FIG. 4 is a flowchart of a method for executing an instruction by a neural network processor according to yet another illustrative embodiment of the present disclosure.

In some optional embodiments, as shown in FIG. 4, step 2022of determining, based on the requested storage space information, the storage space address information meeting the requested storage space information may include steps as follows.

Step 20221, Determining a target type from the plurality of types based on a size relation between the requested storage space information for the respective types and a first free storage space of the first storage space.

The sizes of the first and second storage spaces to be requested for each type may be obtained based on the requested storage space information for each type, and the target type may be determined from the plurality of types based on a size relation between the size of the first storage space to be requested for each type and the first free storage space of the first storage space, such that the first free storage space meets the required size of the first storage space to be requested for the target type.

In some optional embodiments, if there are a plurality of types each corresponding to the first storage space to-be-requested with a required size that can be met, a type corresponding to the first storage space to-be-requested with a maximal size may be taken as the target type, to provide a space of the first storage space as much as possible at a faster memory access speed for execution of the first instruction, and a space of the second storage space as little as possible at a slower memory access speed for execution of the first instruction, thereby further guaranteeing instruction execution performance. For example, the first free storage space is of a size 5MB, the type 1 needs the first storage space of 4MB and the second storage space of 4MB, the type 2 needs the first storage space of 2MB and the second storage space of 6MB, and the type 3 needs the first storage space of 0MB and the second storage space of 8MB. It is seen that the requirements for all three types can be met by the first storage space. To guarantee a memory access speed, the type 1 may be taken as the target type.

Step 20222, Determining, based on the requested storage space information corresponding to the target type, the storage space address information meeting the requested storage space information.

After the target type has been determined, the storage space address information meeting the requested storage space information may be determined based on the sizes of the first and second storage spaces to be requested for the target type.

In some optional embodiments, address information of a storage space in the first storage space having a size same as that of the first storage space to be requested may be taken as the first storage space address information, and address information of a storage space in the second storage space having a size same as that of the second storage space to be requested may be taken as the second storage space address information. The storage space address information meeting the requested storage space information may be determined based on the first storage space address information and the second storage space address information.

In some optional embodiments, address information of all free storage space of the first storage space may be taken as the first storage space address information, and the second storage space address information of the second storage space may be determined based on the size of the requested storage space (including a sum of the size of the first and second storage spaces to be requested) and the size of the free storage space of the first storage space. For example, the target type corresponds to the first storage space of 4MB and the second storage space of 4MB, and a free storage space of the first storage space is of 5MB. Then, address information of the free storage space of 5MB may be taken as the first storage space address information, and address information of a free storage space of 3MB of the second storage space may be taken as the second storage space address information, which further improves the instruction execution efficiency.

According to the embodiment, by determining a target type from the plurality of types of first instructions that best matches the free storage space of the first storage space, a first instruction of the target type is taken as the first instruction to be executed by the neural network processor, which guarantees a matching degree between the free storage space of the first storage space and requirements of the first instruction for the storage space, thereby guaranteeing performance of executing the first instruction.

In some optional embodiments, as shown in FIG. 4, S203 of executing the first instruction through the neural network processor based on the storage space address information may include steps as follows.

storing the first instruction of the target type in a storage space corresponding to the storage space address information, and transmitting virtual address information corresponding to the first instruction to the neural network processor, such that the neural network processor reads the first instruction from the first and second storage spaces based on the virtual address information, and executes the first instruction.

The virtual address information corresponding to the first instruction may be determined based on a mapping relation between a virtual address and a physical address of storage space address information. The mapping relation between a virtual address and a physical address may be obtained in any addressing mode that can be implemented.

In some optional embodiments, an addressing mode may include a mode of unified addressing of the first and second storage spaces and a mode of separate addressing (also referred to as a mode of independent addressing) of the first and second storage spaces. The mode of unified addressing may refer to that physical addresses of the first and second storage spaces are continuous addresses, which, when in use, may differentiate the first storage space from the second storage space by address segments. For example, unified physical addresses ranging from 0x0000 to 0xCCCC are assigned to the first storage space and the second storage space, with the former address segment corresponding to the first storage space, and the latter address segment corresponding to the second storage space. The mode of separate addressing may refer to that the first storage space and the second storage space are addressed individually and separately, and are accessed using different memory access instructions or different direct memory access (DMA) interfaces. For example, both the first storage space and the second storage space may be addressed starting from zero. For example, physical addresses of the first storage space range from 0x0000 to 0xAAAA, and physical addresses of the second storage space may range from 0x0000 to 0xDDDD. The first storage space and the second storage space are accessed separately through different memory access instructions or different DMA interfaces.

In some optional embodiments, the mode of unified addressing is simpler and more straightforward to use. Therefore, according to embodiments of the present disclosure, the first storage space and the second storage space may be addressed in the mode of unified addressing, to further improve convenience and efficiency of accessing the first storage space and the second storage space.

According to the embodiment, by transmitting the virtual address information to the neural network processor, the neural network processor is configured to use the storage space corresponding to the storage space address information indirectly through the virtual address, which makes it easy for the neural network processor to perform a plurality of instruction execution tasks at the same time, thereby avoiding a conflict between different tasks, and improving processing efficiency of the neural network processor.

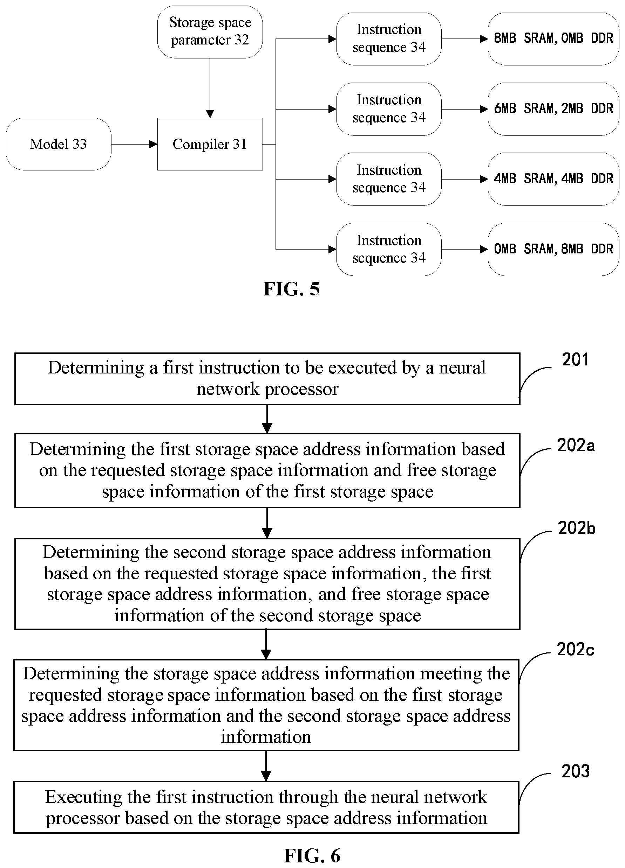

In some optional embodiments, FIG. 5 is a schematic diagram of a compilation mechanism based on an illustrative embodiment of the present disclosure. As shown in FIG. 5, in performing model compilation, a compiler 31 may compile the model 33 based on different storage space parameters 32, to obtain a plurality of versions (that is, the plurality of types) of model instruction sequences 34. In FIG. 5, taking 4 types as an example, 4 types of instruction sequences 34 are obtained, and different instruction sequences 34 correspond to different storage space parameters 32. For example, taking a total required storage space of 8MB by the instruction sequences 34 as an example, storage space allocation modes corresponding to the 4 types of instruction sequences 34 obtained by compilation may be the SRAM of 8MB + the DDR of 0MB, the SRAM of 6MB + the DDR of 2MB, the SRAM of 4MB + the DDR of 4MB, and the SRAM of 0MB + the DDR of 8MB, respectively. And then, in accelerating the inference of the model 33 through the neural network processor, the target type may be obtained based on the free storage space of the first storage space matching a model instruction with storage space requirements that can be met. For example, the free storage space of the first storage space is 5MB. Then, it may be determined that a best target type is the type corresponding to the SRAM of 4MB + the DDR of 4MB. And then, the storage space address information of 4MB of the free storage space of the first storage space (the SRAM) may be taken as the first storage space address information, and the storage space address information of 4MB of the free storage space of the second storage space (the DDR) may be taken as the second storage space address information, to obtain the storage space address information meeting the requested storage space information, thereby guaranteeing a matching degree between the instruction to be executed and the storage spaces, and guaranteeing instruction execution performance.

FIG. 6 is a flowchart of a method for executing an instruction by a neural network processor based on still another illustrative embodiment of the present disclosure.

In some optional embodiments, as shown in FIG. 6, based on the embodiment shown in FIG. 2, step 202 of determining, based on requested storage space information corresponding to the first instruction, storage space address information meeting the requested storage space information may include steps as follows.

Step 202a, Determining the first storage space address information based on the requested storage space information and free storage space information of a free storage space.

The requested storage space information may include a size of the requested storage space (that is, a size of the storage space to be requested). The size of the requested storage space may be determined based on the requested storage space information, and the first storage space address information may be determined from the free storage space of the first storage space based on a size relation between the requested storage space and the free storage space of the first storage space. Illustratively, the size of the requested storage space included in the requested storage space information is 6MB, the size of the free storage space of the first storage space is 4MB. Then, the address information of free storage space of the first storage space of the 4MB may be taken as the first storage space address information.

Step 202b, Determining the second storage space address information based on the requested storage space information, the first storage space address information, and free storage space information of the second storage space

A size of a space located in the second storage space may be obtained based on the size of the requested storage space and the size of the storage space corresponding to the first storage space address information, and the second storage space address information of the second storage space may be determined from the free storage space of the second storage space based on the size of the space located in the second storage space. The free storage space of the second storage space may be determined based on the free storage space information of the second storage space. Illustratively, the size of the requested storage space included in the requested storage space information is 6MB, and the size of the storage space corresponding to the first storage space address information is 4MB. Then, address information of a free storage space of the second storage space of 2MB may be taken as the second storage space address information.

Step 202c, Determining the storage space address information meeting the requested storage space information based on the first storage space address information and the second storage space address information.

The first storage space address information and the second storage space address information may constitute the storage space address information meeting the requested storage space information.

According to the embodiment, the first storage space address information is determined based on the requested storage space information and free storage space information of the first storage space. As the first storage space has a higher memory access speed than that of the second storage space, address information of all free storage space of the first storage space may be taken as the first storage space address information, thereby guaranteeing maximal utilization of the first storage space, as well as instruction execution performance. And a part of the requested storage space that indeed cannot be supported by the first storage space is implemented through the second memory, thereby guaranteeing that the instruction can be executed in time without prolonged waiting periods, and improving the instruction execution efficiency.

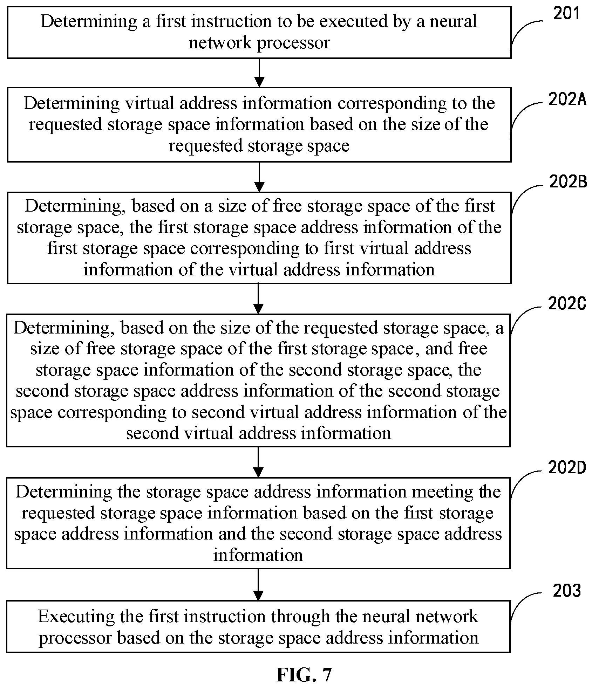

FIG. 7 is a flowchart of a method for executing an instruction by a neural network processor based on yet another illustrative embodiment of the present disclosure.

In some optional embodiments, as shown in FIG. 7, based on the embodiment shown in FIG. 2, the requested storage space information includes a size of the requested storage space. Step 202 of determining, based on requested storage space information corresponding to the first instruction, storage space address information meeting the requested storage space information may include steps as follows.

Step 202A, Determining, based on the size of the requested storage space, virtual address information corresponding to the requested storage space information.

The virtual address information may be address information on a preset virtual address space. Virtual addresses may be coded continuously. The virtual address information corresponding to the requested storage space information is determined based on the size of the requested storage space and an address usage state of the virtual address space.

In some optional embodiments, the first storage space and the second storage space may not be differentiated by the virtual addresses. That is, the virtual addresses are coded uniformly. For example, the virtual addresses included in the virtual address space range from 0x0000 (referred to as 0x0 for short) to 0xDDDD.

Step 202B, Determining, based on a size of free storage space of the first storage space, the first storage space address information of the first storage space corresponding to first virtual address information of the virtual address information.

A virtual space corresponding to the first virtual address information may be of the same size as the free storage space of the first storage space. A mapping relation (also referred to as a correspondence) between the first virtual address information and the first storage space address information may be established.

Step 202C, Determining, based on the size of the requested storage space, a size of free storage space of the first storage space, and free storage space information of the second storage space, the second storage space address information of the second storage space corresponding to second virtual address information of the second virtual address information.

The second virtual address information is virtual address information, other than the first virtual address information, of the virtual address information corresponding to the requested storage space information.

In some optional embodiments, a size of a to-be-occupied space of the second storage space may be obtained based on the size of the requested storage space and the size of free storage space of the first storage space, that is, the size of the storage space corresponding to the first storage space address information. The second storage space address information of the second storage space corresponding to the second virtual address information of the virtual address information, may be determined based on the size of the to-be-occupied space of the second storage space and the free storage space information of the second storage space, and a mapping relation (that is, a correspondence) between the second virtual address information and the second storage space address information is established.

Step 202D, Determining the storage space address information meeting the requested storage space information based on the first storage space address information and the second storage space address information

The storage space address information meeting the requested storage space information may be determined based on the first storage space address information and the second storage space address information, and a mapping relation between the virtual address information and the storage space address information may be obtained.

In some optional embodiments, the virtual address information corresponding to the storage space address information meeting the requested storage space information may be transmitted to the neural network processor, for access by the neural network processor. For example, the neural network processor may be configured to access corresponding storage spaces in the first storage space and the second storage space through the virtual address information, to implement instruction and data reading and writing.

According to the embodiment, by allocating virtual address information for executing an instruction, and then mapping the virtual address information to physical addresses of the first storage space and the second storage space, the neural network processor is allowed to use the first storage space and the second storage space indirectly through the virtual address, thereby improving data security in the first storage space and the second storage space, isolating storage spaces for different instruction tasks of the neural network processor from each other, avoiding or reducing conflicts of memory access by different tasks, and guaranteeing reliable execution of a plurality of tasks.

In some optional embodiments, step 202A of determining, based on the size of the requested storage space, virtual address information corresponding to the requested storage space information may include steps as follows.

Determining, based on the size of the requested storage space, address information of a continuous virtual address space of a free virtual address space of a virtual address space, having a size same as the size of the requested storage space as the virtual address information corresponding to the requested storage space information.

A size of the virtual address space may be determined based on a sum of the sizes of the first storage space and the second storage space. With continuous emergence of instruction execution tasks, the virtual address space is occupied sequentially. Once execution of an instruction completes, the virtual address space may be released (that is, an occupied state of the virtual address space is updated with a free state) for next use. Each time upon determining a first instruction to be executed by the neural network processor, a segment of continuous virtual address space, which may be referred to as a target virtual address space, may be determined from the free virtual address space of the virtual address space based on the size of the requested storage space corresponding to the first instruction, and the target virtual address space is of the size same as that of the requested storage space. For example, the size of the requested storage space is 8MB. Then, the target virtual address space is also of the size of 8MB. The address information of the target virtual address space is taken as the virtual address information corresponding to the requested storage space information.

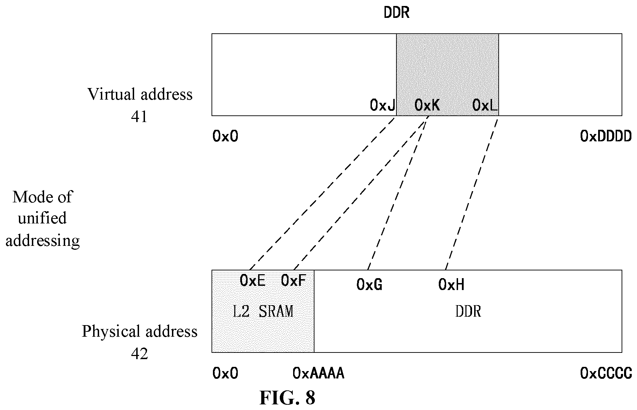

In some optional embodiments, FIG. 8 is a schematic diagram of an addressing principle based on an illustrative embodiment of the present disclosure. As shown in FIG. 8, the mode of unified addressing of the first storage space and the second storage space is adopted, and the first storage space being the L2 SRAM and the second storage space being the DDR are taken as examples. Continuous virtual addresses 41 are adopted, and mapped to physical addresses 42 of different storage spaces. In performing storage space allocation for the first instruction to be executed, the virtual address information (such as virtual address information 0xJ to 0xL in the figure) corresponding to the requested storage space information may be determined based on the size of the requested storage space for the first instruction. Then, based on the size of the free storage space of the L2 SRAM, some virtual addresses (such as 0xJ to 0xK in the figure, i.e., the first virtual address information) of the virtual address information 0xJ to 0xL are mapped to the L2 SRAM, to obtain the first storage space address information (such as 0xEto 0xF in the figure) of the first virtual address information of the L2 SRAM, and the other virtual addresses (such as 0xKto 0xL in the figure, i.e., the second virtual address information) of the virtual address information 0xJ to 0xL are mapped to the DDR, to obtain the second storage space address information (such as 0xGto 0xH in the figure) of the DDR corresponding to the second virtual address information. The mapping mode in FIG. 8 is merely illustrative. In an actual application, the first storage space address information of the first storage space to which the first virtual address information corresponds may not be a continuous storage space. That is, the first virtual address information may be mapped to a plurality of segments of free storage space of the first storage space. Likewise, the second virtual address information may be mapped to a plurality of segments of free storage space of the second storage space. And, in case there are a plurality of tasks for the neural network processor at the same time, there may be respective mappings of a plurality of segments of virtual address information to the first storage space and the second storage space.

According to the embodiment, flexible storage space allocation for a model instruction is implemented effectively through continuous virtual addresses and unified addressing of the L2 SRAM and the DDR, thereby improving the rate of utilization of the L2 SRAM, reducing the waiting time of the model instruction, and improving the instruction execution efficiency.

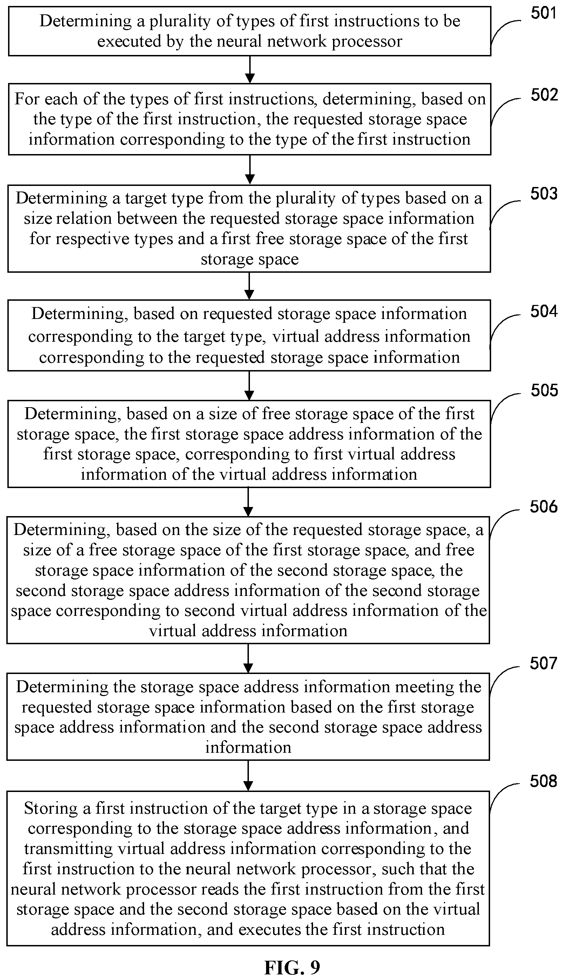

In some optional embodiments, FIG. 9 is a flowchart of a method for executing an instruction by a neural network processor according to still another illustrative embodiment of the present disclosure. As shown in FIG. 9, the method may include steps as follows.

Step 501, Determining a plurality of types of first instructions to be executed by the neural network processor.

The plurality of types of first instructions may be a plurality of versions of the model instruction obtained by performing compilation beforehand.

Step 502, For each of the types of first instructions, determining, based on the type of the first instruction, the requested storage space information corresponding to the type of the first instruction.

Step 503, Determining a target type from the plurality of types based on a size relation between the requested storage space information for each type and a first free storage space of the first storage space.

Step 504, Determining, based on requested storage space information corresponding to the target type, virtual address information corresponding to the requested storage space information.

Specifically, the size of the requested storage space may be determined based on the requested storage space information. Address information of a continuous virtual address space, having a size same as that of the requested storage space, of a free virtual address space of a virtual address space, is determined as the virtual address information corresponding to the requested storage space information.

Step 505, Determining, based on a size of free storage space of the first storage space, the first storage space address information of the first storage space, corresponding to first virtual address information of the virtual address information.

Step 506, Determining, based on the size of the requested storage space, a size of a free storage space of the first storage space, that is, the size of the storage space corresponding to the first storage space address information, and free storage space information of the second storage space, the second storage space address information of the second storage space corresponding to second virtual address information of the virtual address information.

Step 507, Determining the storage space address information meeting the requested storage space information based on the first storage space address information and the second storage space address information.

Step 508, Storing the first instruction of the target type in a storage space corresponding to the storage space address information, and transmitting virtual address information corresponding to the first instruction to the neural network processor, such that the neural network processor reads the first instruction from the first storage space and the second storage space based on the virtual address information, and executes the first instruction.

Specific operations of step 501 to step 508 are similar to respective steps in aforementioned embodiments, which are not repeated here.

According to the embodiment, a plurality of versions of the model instructions are generated through compilation, and targeted optimization is performed in compilation scheduling for different modes of hybrid allocation of the first storage space and the second storage space. For example, an instruction sequence is adjusted based on different memory access speeds, so as to implement memory access and computation better in parallel, thereby having good instruction execution performance in different modes of hybrid allocation. When model inference acceleration is performed through the neural network processor, a most suitable version may be selected based on the size of actual available first storage space, thereby guaranteeing optimized model performance. And, by mapping of continuous virtual addresses to physical addresses of the first storage space and the second storage space, the first storage space and the second storage space may be accessed by the neural network processor through the virtual addresses, which makes it easy to implement storage space access during different model tasks while protecting data security of the storage spaces.

Respective embodiments of the present disclosure may be implemented individually or as any combination that causes no conflict, which is not limited to the combination of step 501 to step 508, and specifics of which may be set as needed, and not limited in the present disclosure.

Any method for executing an instruction by a neural network processor according to embodiments of the present disclosure may be implemented by any appropriate device capable of data processing, including but not limited to a terminal device, a server, etc. Alternatively, any method for executing an instruction by a neural network processor according to embodiments of the present disclosure may be implemented by a processor. For example, the processor implements any method for executing an instruction by a neural network processor mentioned in embodiments of the present disclosure by calling respective instructions stored in a memory, which is not elaborated hereinafter.

### Illustrative apparatus

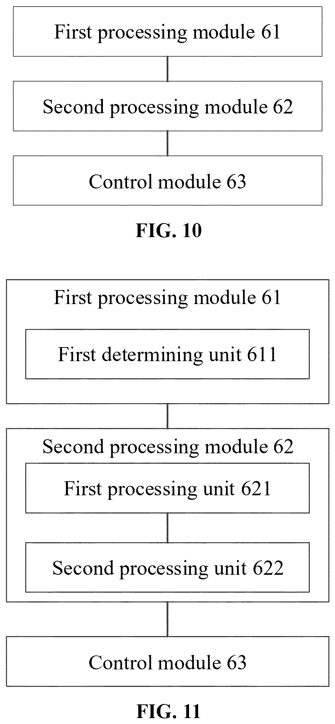

FIG. 10 is a schematic diagram of a structure of an apparatus for executing an instruction by a neural network processor according to an illustrative embodiment of the present disclosure. The apparatus according to the embodiment may be configured to implement the respective method according to embodiments of the present disclosure. The apparatus as shown in FIG. 10 may include: a first processing module 61, a second processing module 62, and a control module 63.

The first processing module 61 may be configured to determine a first instruction to be executed by the neural network processor.

The second processing module 62 may be configured to determine, based on requested storage space information corresponding to the first instruction, storage space address information meeting the requested storage space information. The storage space address information includes first storage space address information of a first storage space and second storage space address information of a second storage space.

The control module may be configured to execute the first instruction through the neural network processor based on the storage space address information.

FIG. 11 is a schematic diagram of a structure of an apparatus for executing an instruction by a neural network processor according to another illustrative embodiment of the present disclosure.

In some optional embodiments, as shown in FIG. 11, based on the embodiment shown in FIG. 10, the first processing module 61 may include:
a first determining unit 611, configured to determine a plurality of types of first instructions to be executed by the neural network processor.

The second processing module 62 may include: a first processing unit 621 and a second processing unit 622.

The first processing unit 621 may be configured to, for each of the types of first instructions, determine the requested storage space information corresponding to the type, based on the type of first instruction.

The requested storage space information corresponding to each of the types includes sizes of the first storage space and the second storage space to be requested.

The second processing unit 622 may be configured to determine, based on the requested storage space information corresponding to the type, the storage space address information meeting the requested storage space information.

In some optional embodiments, the size of the first storage space to be requested is different for different types, and the size of the second storage space to be requested is different for different types.

In some optional embodiments, the plurality of types of first instructions may be obtained as follows.

The plurality of types of first instructions may be obtained by compiling a neural network model to be compiled based on a plurality of groups of storage space parameters; each group of storage space parameters include a first size parameter corresponding to the first storage space and a second size parameter corresponding to the second storage space; the first and second size parameters are different for the different groups.

In some optional embodiments, the second processing unit 622 may be specifically configured to: determine a target type from the plurality of types based on a size relation between the requested storage space information for the respective types and a first free storage space of the first storage space. The storage space address information meeting the requested storage space information is determined based on requested storage space information corresponding to the target type.

In some optional embodiments, as shown in FIG. 11, the control module 63 may be specifically configured to: store the first instruction of the target type in a storage space corresponding to the storage space address information, and transmit virtual address information corresponding to the first instruction to the neural network processor, such that the neural network processor reads the first instruction from the first storage space and the second storage space based on the virtual address information, and executes the first instruction.

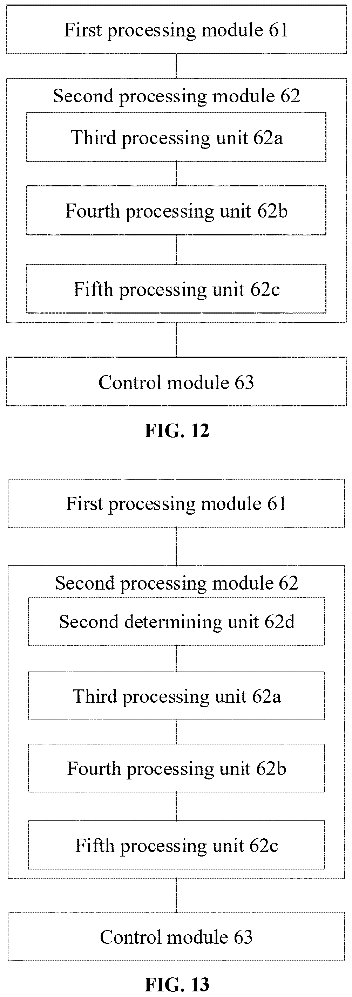

FIG. 12 is a schematic diagram of a structure of an apparatus for executing an instruction by a neural network processor according to yet another illustrative embodiment of the present disclosure.

In some optional embodiments, as shown in FIG. 12, based on the embodiment shown in FIG. 10, the second processing module 62 may include: a third processing unit 62a, a fourth processing unit 62b, and a fifth processing unit 62c.

The third processing unit 62a may be configured to determine the first storage space address information based on the requested storage space information and free storage space information of the first storage space.

The fourth processing unit 62b may be configured to determine the second storage space address information based on the requested storage space information, the first storage space address information, and free storage space information of the second storage space.

The fifth processing unit 62c may be configured to determine the storage space address information meeting the requested storage space information based on the first storage space address information and the second storage space address information.

In some optional embodiments, based on the embodiment shown in FIG. 11, the second processing unit 622 is specifically configured to: determine the first storage space address information based on the requested storage space information and free storage space information of the first storage space; determine the second storage space address information based on the requested storage space information, the first storage space address information, and free storage space information of the second storage space; and determine the storage space address information meeting the requested storage space information based on the first storage space address information and the second storage space address information.

FIG. 13 a schematic diagram of a structure of an apparatus for executing an instruction by a neural network processor according to still another illustrative embodiment of the present disclosure.

In some optional embodiments, as shown in FIG. 13, based on the embodiment shown in FIG. 10, the requested storage space information includes a size of a requested storage space. The second processing module 62 may include:
a second determining unit 62d, configured to determine, based on the size of the requested storage space, virtual address information corresponding to the requested storage space information.
a third processing unit 62a, configured to determine, based on a size of free storage space of the first storage space, the first storage space address information of the first storage space corresponding to first virtual address information of the virtual address information.
a fourth processing unit 62b, configured to determine, based on the size of the requested storage space, a size of free storage space of the first storage space, that is, the size of the storage space corresponding to the first storage space address information, and the free storage space information of the second storage space, the second storage space address information of the second storage space corresponding to second virtual address information of the virtual address information.

The second virtual address information is virtual address information other than the first virtual address information of the virtual address information corresponding to the requested storage space information.
a fifth processing unit 62c, configured to determine the storage space address information meeting the requested storage space information based on the first storage space address information and the second storage space address information.

In some optional embodiments, based on the embodiment shown in FIG. 12, the second processing module 62 further includes a second determining unit 62d. The second determining unit 62d may be configured to determine virtual address information corresponding to the requested storage space information based on the size of the requested storage space. The third processing unit 62a may be configured to determine, based on a size of free storage space of the first storage space, the first storage space address information of the first storage space corresponding to first virtual address information of the virtual address information. The fourth processing unit 62b may be configured to determine, based on the size of the requested storage space, a size of a storage space corresponding to the first storage space address information, and free storage space information of the second storage space, the second storage space address information of the second storage space corresponding to second virtual address information of the virtual address information. The second virtual address information is virtual address information other than the first virtual address information of the virtual address information corresponding to the requested storage space information. The fifth processing unit 62c may be configured to determine the storage space address information meeting the requested storage space information based on the first storage space address information and the second storage space address information.

In some optional embodiments, the second determining unit 62d may be specifically configured to:
determine, based on the size of the requested storage space, address information of a continuous virtual address space of a free virtual address space of a virtual address space, having a size same as the size of the requested storage space as the virtual address information corresponding to the requested storage space information.

The beneficial technical effects of the exemplary embodiments of the present apparatus can be found in the corresponding beneficial technical effects of the aforementioned illustrative method section, which will not be repeated here for brevity.

### Illustrative electronic device

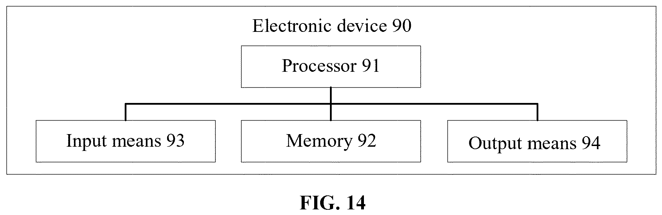

FIG. 14 is a diagram of a structure of an electronic device according to embodiments of the present disclosure. As shown in FIG.14, the electronic device includes at least a processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache, and the like. The nonvolatile memory may include, for example, read-only memory (ROM), hard disk, and flash memory, and the like. One or more computer program instructions may be stored on the computer readable storage medium. The processor 91 may execute one or more of the program instructions to implement the method according to the various embodiments of the present disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means 94 may output various information to the outside, and may include, for example, a display, a speaker, a printer, a communication network, and a remote output device connected to the communication network.

For simplicity, FIG. 14 shows only some of components in the electronic device 90 that are related to the present disclosure, and components such as a bus and an input/output interface are omitted. In addition, according to specific application situations, the electronic device 90 may further include any other appropriate components.

Illustrative computer program product and computer readable storage medium

In addition to the foregoing method and device, embodiments of this disclosure may relate to a computer program product, which includes computer program instructions, which, when executed by a processor, cause the processor to perform the steps, of the method according to the embodiments of the present disclosure, that are described in the "Illustrative method" section of this specification.

The computer program product may include program code, written with one or any combination of a plurality of programming languages, which is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium storing computer program instructions, which, when executed by the processor, cause the processor to perform the steps, of the method according to the embodiments of the present disclosure, that are described in the "Illustrative method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, benefits, and effects mentioned in the present disclosure are merely examples but are not for limitation, and should not be construed as required to be possessed by all embodiments of the present disclosure. Additionally, specific details described above are merely for illustrative and explanatory purposes, not to restrict the scope. The details described above do not imply that the disclosure must be implemented using the exact configurations or steps described.

A person skilled in the art may make various modifications and variations to the present disclosure without departing from the spirit and the scope of the present disclosure. If such modifications and variations fall within the scope of the claims of this disclosure and the equivalents, , the present disclosure also intends to include these modifications and variations.

## Claims

1. A method for executing an instruction by a neural network processor, **characterized by** comprising:
determining (201) a first instruction to be executed by the neural network processor;
determining (202), based on requested storage space information corresponding to the first instruction, storage space address information meeting the requested storage space information, the storage space address information comprising first storage space address information of a first storage space and second storage space address information of a second storage space; and
executing (203), based on the storage space address information, the first instruction through the neural network processor.

2. The method according to claim **1,** wherein the determining (202), based on the requested storage space information corresponding to the first instruction, the storage space address information meeting the requested storage space information comprises:
determining (202a) the first storage space address information based on the requested storage space information and free storage space information of the first storage space;
determining (202b) the second storage space address information based on the requested storage space information, the first storage space address information, and free storage space information of the second storage space; and
determining (202c) the storage space address information meeting the requested storage space information based on the first storage space address information and the second storage space address information.

3. The method according to claim 1, wherein the requested storage space information comprises a size of a requested storage space, and the determining (202), based on requested storage space information corresponding to the first instruction, storage space address information meeting the requested storage space information comprises:
determining (202A), based on the size of the requested storage space, virtual address information corresponding to the requested storage space information;
determining (202B), based on a size of free storage space of the first storage space, the first storage space address information of the first storage space corresponding to first virtual address information of the virtual address information;
determining (202C), based on the size of the requested storage space, a size of free storage space of the first storage space, and free storage space information of the second storage space, the second storage space address information of the second storage space corresponding to second virtual address information of the virtual address information, the second virtual address information being virtual address information, other than the first virtual address information, of the virtual address information corresponding to the requested storage space information; and
determining (202D) the storage space address information meeting the requested storage space information based on the first storage space address information and the second storage space address information.

4. The method according to claim 3, wherein the determining (202A), based on the size of the requested storage space, virtual address information corresponding to the requested storage space information comprises:
determining, based on the size of the requested storage space, address information of a continuous virtual address space of a free virtual address space of a virtual address space, having a size same as the size of the requested storage space as the virtual address information corresponding to the requested storage space information.

5. The method according to any one of claims 1-4, wherein the determining (201) a first instruction to be executed by the neural network processor comprises:
determining (2011) a plurality of types of first instructions to be executed by the neural network processor,
wherein the determining (202), based on requested storage space information corresponding to the first instruction, storage space address information meeting the requested storage space information comprises:
for each of the types of first instructions, determining (2021), based on the type of the first instruction, the requested storage space information corresponding to the type of the first instruction, comprising sizes of the first storage space and the second storage space to be requested; and
determining (2022), based on the requested storage space information corresponding to respective types, the storage space address information meeting the requested storage space information.

6. The method according to claim 5, wherein the size of the first storage space to be requested is different for different types, and the size of the second storage space to be requested is different for different types.

7. The method according to claim 5, wherein the determining (2022), based on the requested storage space information corresponding to respective types, the storage space address information meeting the requested storage space information comprises:
determining (20221) a target type from the plurality of types based on a size relation between the requested storage space information for the respective types and a first free storage space of the first storage space; and
determining (20222), based on the requested storage space information corresponding to the target type, the storage space address information meeting the requested storage space information.

8. The method according to claim 7, wherein the executing (203), based on the storage space address information, the first instruction through the neural network processor comprises:
storing the first instruction of the target type in a storage space corresponding to the storage space address information, and transmitting virtual address information corresponding to the first instruction to the neural network processor, such that the neural network processor reads the first instruction from the first storage space and the second storage space based on the virtual address information, and executes the first instruction.

9. An apparatus for executing an instruction by a neural network processor, **characterized by** comprising:
a first processing module (61), configured to determine a first instruction to be executed by the neural network processor;
a second processing module (62), configured to determine, based on requested storage space information corresponding to the first instruction, storage space address information meeting the requested storage space information, the storage space address information comprising first storage space address information of a first storage space and second storage space address information of a second storage space; and
a control module (63), configured to execute the first instruction through the neural network processor based on the storage space address information.

10. The apparatus according to claim 9, wherein the first processing module (61) comprises a first determining unit (611), configured to determine a plurality of types of first instructions to be executed by the neural network processor.

11. The apparatus according to claim 9, wherein the second processing module (62) comprises:
a first processing unit (621), configured to, for each of the types of first instructions, determine the requested storage space information corresponding to the type of the first instruction based on the type of first instruction; and
a second processing unit (622), configured to determine, based on the requested storage space information corresponding to respective types, the storage space address information meeting the requested storage space information.

12. The apparatus according to claim 11, wherein the second processing unit (622) is further configured to determine a target type from the plurality of types based on a size relation between the requested storage space information for the respective types and a first free storage space of the first storage space.

13. The apparatus according to claim 9, wherein the control module (63) is configured to: store the first instruction of the target type in a storage space corresponding to the storage space address information, and transmit virtual address information corresponding to the first instruction to the neural network processor.

14. A computer readable storage medium, **characterized by** storing a computer program thereon, which, when executed by a processor (91), causes the processor (91) to implement the method according to any one of claims 1-8.

15. An electronic device, **characterized by** comprising:
a processor (91); and
a memory (92) configured to store processor-executable instructions,
wherein the processor (91) is configured to read the executable instructions from the memory (92), and execute the instructions to implement the method according to any one of claims 1-8.
